Europäisches Patentamt

(19) European Patent Office

Office européen des brevets

(11) Publication number: **0 256 605**
**B1**

(12) # EUROPEAN PATENT SPECIFICATION

(45) Date of publication of the patent specification:
26.09.90

(21) Application number: 87201535.9

(22) Date of filing: 12.08.87

(51) Int. Cl.⁵: **C08F 4/64,** C08F 10/00

(54) Stabilized zirconocene/aluminoxane catalysts and process for the preparation thereof.

(30) Priority: 15.08.86 US 896697

(43) Date of publication of application:
24.02.88 Bulletin 88/8

(45) Publication of the grant of the patent:
26.09.90 Bulletin 90/39

(84) Designated Contracting States:
BE DE FR GB IT NL SE

(56) References cited:
EP-A- 0 069 951
US-A- 3 404 096

(73) Proprietor: SHELL INTERNATIONALE RESEARCH
MAATSCHAPPIJ B.V., Carel van Bylandtlaan 30,
NL-2596 HR Den Haag(NL)

(72) Inventor: Slaugh, Lynn Henry, 12518 Texas Army Trail,
Cypress, TX 77429(US)
Inventor: Schoenthal, Galeon Wayne, 2315 Briar Lee,
Houston, TX 77077(US)

(74) Representative: Aalbers, Onno et al, P.O. Box 302,
NL-2501 CH The Hague(NL)

ACTORUM AG

## Description

The invention relates to a zirconocene/aluminoxane catalyst composition stabilized against during storage prior to use as a catalyst. The invention also relates to a process for the preparation of such stabilized compositions.

Zirconocene/aluminoxane catalysts are known for producing polymers from olefins. European patent specification No. 128 045 deals with the use of titanocenes, zirconocenes, hafnocenes and vanadocenes in combination with aluminoxane to produce polyethylene. In US Patent 4 685 078 is disclosed the use of certain zirconocenes and hafnocenes in combination with aluminoxane to produce dimers of alpha-olefins. US patent specification 4 404 344 deals with the use of zirconocenes in combination with aluminoxanes to produce polymers. One problem with these zirconocene/-aluminoxane catalysts is that they must be used relatively quickly after preparation or their performance as catalysts will suffer.

It is an object of the present invention to stabilize these catalysts against aging during storage prior to use.

Accordingly, the invention provides a zirconocene/aluminoxane catalyst composition stabilized against aging during storage prior to use as a catalyst which composition comprises a) a zirconocene of the general formula (cyclopentadienyl) $_n$ZrY$_n$ wherein n is an integer from 1 to 4, and each Y individually represents a hydrogen or halogen atom or an alkyl group having in the range of from 1 to 5 carbon atoms or an aryl group having in the range of from 6 to 20 carbon atoms, b) an aluminoxane and c) at least 1 mol of a stabilizing olefin per mol of zirconocene, the stabilizing olefin having the general formula $R_1R_2R_3CCH_2=CH_2$ where $R_1$, $R_2$ and $R_3$ each represent an alkyl group having in the range of from 1 to 20 carbon atoms.

The invention further provides a process for the preparatiopn of said stabilized catalyst compositions which process comprises adding to a catalyst composition comprising
a) a zirconocene of the general formula (cyclopentadienyl)$_n$ZrY$_n$ wherein n is an integer from 1 to 4, and each Y individually represents a hydrogen or halogen atom or an alkyl group having in the range of from 1 to 5 carbon atoms or an aryl group having in the range of from 6 to 20, carbon atoms, and
b) an aluminoxane, during or after said preparatoin at least 1 mol of a stabilizing olefin per mol of zirconocene, the stabilizing olefin having the general formula $R_1R_2R_3CCH_2=CH_2$ wherein $R_1$, $R_2$ and $R_3$ each represent an alkyl group having in the range of from 1 to 20 carbon atoms.

The zirconocene/aluminoxane catalysts to be stabilized by the process according to the present invention are prepared by reacting a suitable zirconocene with an aluminoxane.

The aluminoxanes (also referred to as "alumoxanes") are well-known in the art and are polymeric aluminium compounds which can be represented by the general formula $(R-A1-O)_n$ which is a cyclic compound and $R(R-A1-O)_nA1R_2$, which is a linear compound. In the general formula, R preferably represents a $C_1-C_5$ alkyl group such as, for example, methyl, ethyl, propyl, butyl or pentyl, and n is an integer from 1 to 20. Preference is given to methyl and ethyl groups, particularly to methyl groups. Generally, in the preparation of aluminoxanes from trialkylaluminium compounds and water, a mixture of the linear and cyclic compounds are obtained.

The aluminoxanes can be prepared in various ways. They are prepared by contacting water with a solution of trialkylaluminium in a suitable organic solvent. Illustrative examples of suitable trialkylaluminium compounds are trimethylaluminium, triethylaluminium, tri-isopropylaluminium, tri-n-propylaluminium, triisobutyl-aluminium and tri-n-pentylaluminium. For example, the trialkylaluminium compound is treated with water present in a moist solvent, or ultrasonically dispersed in a solvent or dispersed in a solvent by high-speed stirring or by contact with a hydrated salt such as hydrated copper sulphate or aluminium sulphate as described in US patent specification 4 544 762.

The inert solvents that can be used to dissolve the trialkyl-aluminium or disperse or contain the water are well-known and include, for example, the saturated aliphatic compounds such as butane, pentane, hexane, heptane, octane, isoctane and the purified kerosenes; the cycloaliphatics such as cyclobutane, cyclopentane, cyclohexane, cycloheptane, methylcyclopentane and dimethylcyclopentane; alkenes such as butene, hexene and octene; cycloalkenes such as cyclohexene; and the aromatic solvents such as benzene, toluene and the xylenes. The major requirements in the selection of a solvent are that it be liquid at the reaction temperature, that it does not react with the trialkylaluminium compound or with water or interfere with any subsequent reaction wherein the aluminoxanes are used in polymerization catalysts. The solvents must be oxygen-free. Hydroxyl groups, ether groups, carboxyl groups and keto groups adversely affect preparation of the aluminoxanes. All or part of the solvent may be the stabilizing olefin having the general formula mentioned hereinbefore.

In the general formula (cyclopentadienyl)$_n$ZrY$_n$ mentioned hereinbefore n is preferably 2 and Y preferably represents a hydrogen or chlorine atom or a methyl group. It is uderstood that when n is 2–4 the Y's may be the same or different. Preferred zirconocenes are bis(cyclopentadienyl)zirconium dichloride, bis(cyclopentadienyl)zirconium hydrogen chloride and bis(cyclopentadienyl)zirconium dimethyl. Within the difinition of cyclopentadienyl is included the lower alkyl($C_1-C_5$)-substituted, preferably the methyl-substituted cyclopentadienyl.

The ratio of aluminium in the aluminoxane to zirconium metal in the zirconocenes can be in the range of about 1:1 to about $10^8$:1.

In general terms, the catalyst is prepared by adding the aluminoxane dissolved in an organic solvent, preferably the solvent utilized to prepare the aluminoxane, to a well stirred suspension of the zirconocene in a dry, inert, organic solvent, which solvent can suitably be the solvent described hereinbefore for the preparation of the aluminoxane. Preferably, the solvents are the same. When the stirred solution to which the aluminoxane has been added becomes homogeneous, the catalyst has been formed.

Usually not more than 20 mol of the stabilizing olefin per mol of zirconocene are present in the catalyst compositions according to the present invention. The stabilizing olefins should be added during or shortly after preparation to prevent degradation. Typically, the stabilizing olefin is added less than an hour after preparation. Alternatively, the stabilizing olefin may be used in total or in part in the preparation of the aluminoxane or to suspend the zirconocene during catalyst preparation whereby at least 1 mol of stabilizing olefin is present per mol of zirconocene in the finished catalysts.

Examples of stabilizing olefins are 3-methyl-3-ethyl-1-pentene, 3,3-dimethyl-1-pentene and, which is preferred, 3,3-dimethyl-1-butene.

The following Examples further illustrate the invention.

Examples 1-3 and Comparative Experiments A and B

In a nitrogen-filled dry box methylalumoxane was prepared by adding 8 mmol of trimethylaluminium as a 25% by weight solution in toluene to 2 mmol of copper sulphate pentahydrate slurried in toluene. After the reaction of the trimethylaluminium with the water in the copper sulphate was complete as evidenced by cessation of gas evolution, the solution of the resultant methylaluminoxane was transferred to a nitrogen-flushed, stirred flask containing 1 mmol of bis(cyclopentadienyl)zirconium dichloride and 2 mmol of the solvent/olefin listed in column 1 of Table 1 hereinafter. The catalysts thus formed were stored under nitrogen and at ambient temperature for several days after which time 320 mmol of 1-octene was added, and the system stirred and heated to 40 °C to effect dimerization of the 1-octene. Conversions of 1-octene were measured after 0.5 h and 2 h reaction times and are presented in Table 1.

EP 0 256 605 B1

## Table 1

| Example | Comparative Experiment | Solvent/olefin | Storage time before adding 1-octene | Conversion of 1-octene 0.5 h | 2 h |
|---|---|---|---|---|---|
|  | A | toluene | 4 days | 0 | 0 |
|  | B | 1-octene | 3 days | 1 | 1 |
| 1 |  | 3,3-dimethyl-1-butene | 4 days | 7.3 | 68.2 |
| 2 |  | 3-methyl-3-ethyl-1-pentene | 4 days | 9.7 | - |
| 3 |  | 3,3-dimethyl-1-pentene | 6 days | 2.4 | 18.9 |

Table 1 shows that the best stabilizing effect has been obtained with 3,3-dimethyl-1-butene

## Claims

1. A zirconocene/aluminoxane catalyst composition stabilized against aging during storage prior to use as a catalyst which composition comprises a) a zirconocene of the general formula (cyclopentadienyl)$_n$ZrY$_n$ wherein n is an integer from 1 to 4, and each Y individually represents a hydrogen or halogen atom or an alkyl group having in the range of from 1 to 5 carbon atoms or an aryl group having in the range of from 6 to 20 carbon atoms, b) an aluminoxane and c) at least 1 mol of a stabilizing olefin per mol of zirconocene, the stabilizing olefin having the general formula R$_1$R$_2$R$_3$CCH$_2$=CH$_2$ where R$_1$, R$_2$ and R$_3$ each represent an alkyl group having in the range of from 1 to 20 carbon atoms.

2. A stabilized composition as claimed in claim 1 wherein n is 2 and Y represents a hydrogen or chlorine atom or a methyl group.

3. A stabilized composition as claimed in claim 1 or 2 wherein the zirconocene is bis(cyclopentadienyl)zirconium dichloride, bis(cyclopentadienyl)zirconium hydrogen chloride or bis(cyclopentadienyl)zirconium dimethyl.

4. A stabilized composition as claimed in any one of the preceding claims wherein the stabilizing olefin is 3,3-dimethyl-1-butene.

5. A process for the preparation of a stabilized catalyst composition as claimed in any one of the preceding claims which process comprises adding to a catalyst composition comprising

a) a zirconocene of the general formula (cyclopentadienyl)$_n$ZrY$_n$ wherein n is an integer from 1 to 4, and each Y individually represents a hydrogen or halogen atom or an alkyl group having in the range of from 1 to 5 carbon atoms or an aryl group having in the range of from 6 to 20 carbon atoms, and

b) an aluminoxane, during or after said preparation at least 1 mol of a stabilizing olefin per mol of zirconocene, the stabilizing olefin having the general formula R$_1$R$_2$R$_3$CCH$_2$=CH$_2$ wherein R$_1$, R$_2$ and R$_3$ each represent an alkyl group having in the range of from 1 to 20 carbon atoms.

## Patentansprüche

1. Zirkonocen/Aluminoxan Katalysatorzusammensetzung, stabilisiert gegen Alterung während der Lagerung vor einer Verwendung als Katalysator, wobei die Zusammensetzung umfaßt

a) ein Zirkonocen der allgemeinen Formel (Cyclopentadienyl)$_n$ ZrY$_n$, worin n eine ganze Zahl von 1 bis 4 ist und jedes Y unabhängig voneinander ein Wasserstoff- oder Halogenatom oder eine Alkylgruppe mit Kohlenstoffatomen im Bereich von 1 bis 5 oder eine Arylgruppe mit Kohlenstoffatomen im Bereich von 6 bis 20 darstellt,

b) ein Aluminoxan und

c) mindestens 1 Mol eines stabilisierenden Olefins pro Mol Zirkonocen, wobei das stabilisierende Olefin die allgemeine Formel R$_1$R$_2$R$_3$CCH$_2$=CH$_2$ aufweist, worin R$_1$, R$_2$ und R$_3$ jeweils für eine Alkylgruppe mit Kohlenstoffatomen im Bereich von 1 bis 20 stehen.

2. Stabilisierte Zusammensetzung nach Anspruch 1, worin n 2 ist und Y für ein Wasserstoff- oder Chloratom oder eine Methylgruppe steht.

3. Stabilisierte Zusammensetzung nach Anspruch 1 oder 2, worin das Zirkonocen bis(Cyclopentadienyl)zirkoniumdichlorid, bis(Cyclopentadienyl)zirkoniumhydrogenchlorid oder bis(Cyclopentadienyl)zirkoniumdimethyl ist.

4. Stabilisierte Zusammensetzung nach einem der vorhergehenden Ansprüche, worin das stabilisierende Olefin 3, 3-Dimethyl-1buten ist.

5. Verfahren zur Herstellung einer stabilisierten Katalysatorzusammensetzung nach einem der vorhergehenden Ansprüche, wobei dieses Verfahren umfaßt, einer Katalysatorzusammensetzung, welche

a) ein Zirkonocen der allgemeinen Formel (Cyclopentadienyl)$_n$ ZrY$_n$, worin n eine ganze Zahl von 1 bis 4 ist und jedes Y unabhängig voneinander für ein Wasserstoff- oder Halogenatom oder eine Alkylgruppe mit Kohlenstoffatomen im Bereich von 1 bis 5 oder eine Arylgruppe mit Kohlenstoffatomen im Bereich von 6 bis 20 steht und

b) ein Aluminoxan umfaßt, während oder nach dieser Herstellung mindestens ein Mol eines stabilisierenden Olefins pro Mol Zirkonocen zuzugeben, wobei das stabilisierende Olefin die allgemeine Formel R$_1$R$_2$R$_3$CCH$_2$=CH$_2$ aufweist, worin R$_1$, R$_2$ und R$_3$ jeweils für eine Alkylgruppe mit Kohlenstoffatomen im Bereich von 1 bis 20 stehen.

## Revendications

1. Une composition catalytique zirconocène/aluminoxane stabilisée contre le vieillissement durant un stockage avant utilisation comme catalyseur, laquelle composition comprend

a) un zirconocène de la formule générale (cyclopentadiényl)$_n$ ZrY$_n$ où n est un nombre entier de 1 à 4 et chaque Y individuellement représente un atome d'hydrogène ou d'halogène ou un groupe alcoyle ayant de 1 à 5 atomes de carbone ou un groupe aryle ayant de 6 à 20 atomes de carbone,

b) un aluminoxane et

c) au moins 1 mole d'une oléfine stabilisante par mole de zirconocène, l'oléfine stabilisante ayant la formule générale $R_1R_2R_3CCH_2=CH_2$ où $R_1$, $R_2$ et $R_3$ représentent chacun un groupe alcoyle ayant de 1 à 20 atomes de carbone.

2. Une composition stabilisée selon la revendication 1, dans laquelle n est 2 et Y représente un atome d'hydrogène ou de chlore ou un groupe méthyle.

3. Une composition stabilisée selon la revendication 1 ou 2, dans laquelle le zirconocène est du dichlorure de bis(cyclopentadiényl)zirconium, de l'hydrogénochlorure de bis(cyclopentadiényl)zirconium ou du bis(cyclopentadiényl)zirconium diméthyle.

4. Une composition stabilisée selon l'une quelconque des revendications précédentes, dans laquelle l'oléfine stabilisante est du 3, 3-diméthyl-1-butène.

5. Un procédé pour la préparation d'une composition catalytique stabilisée selon l'une quelconque des revendications précédentes, procédé qui comprend l'addition à une composition catalytique comprenant

a) un zirconocène de la formule générale (cyclopentadiényl) $_nZrY_n$ où n est un nombre entier de 1 à 4 et chaque Y individuellement représente un atome d'hydrogène ou d'halogène ou un groupe alcoyle ayant de 1 à 5 atomes de carbone ou un groupe aryle ayant de 6 à 20 atomes de carbone et

b) un aluminoxane, pendant ou après cette préparation, d'au moins 1 mole d'une oléfine stabilisante par mole de zirconocène, l'oléfine stabilisante ayant la formule générale $R_1R_2R_3CCH_2=CH_2$ où $R_1$, $R_2$ et $R_3$ représentent chacun un groupe alcoyle ayant de 1 à 20 atomes de carbone.